(19) Europäisches Patentamt
European Patent Office
Office européen des brevets

(11) Veröffentlichungsnummer: **0 200 274 B1**

# (12) EUROPÄISCHE PATENTSCHRIFT

(45) Veröffentlichungstag der Patentschrift: **01.07.92**

(51) Int. Cl.$^5$: **H04L 7/02**

(21) Anmeldenummer: **86200723.4**

(22) Anmeldetag: **29.04.86**

## (54) Verfahren und Schaltungsanordnung zur Phasen-Synchronisation eines regenerierten Empfangsbittakts.

(30) Priorität: **30.04.85 DE 3515542**

(43) Veröffentlichungstag der Anmeldung:
**05.11.86 Patentblatt 86/45**

(45) Bekanntmachung des Hinweises auf die Patenterteilung:
**01.07.92 Patentblatt 92/27**

(84) Benannte Vertragsstaaten:
**AT DE FR**

(56) Entgegenhaltungen:
**EP-A- 0 081 835**
**DE-A- 3 012 075**
**DE-A- 3 417 358**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR AT**

(72) Erfinder: **Grauel, Christoph, Dr.-Ing.**
**Drosselweg 1**
**W-8501 Feucht(DE)**
Erfinder: **Steckmann, Helmut, Ing. grad.**
**Karl-Plesch-Strasse 4**
**W8501 Schwanstetten 1(DE)**
Erfinder: **Stahl, Wolfgang, Dipl.-Ing.**
**Blütenstrasse 25**
**W-8501 Eckental(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Phasen-Synchronisation eines regenerierten Empfangsbittakts gemäß dem Oberbegriff des Patentanspruchs 1.

In digitalen Nachrichtensystemen, die mit blockweiser Übertragung arbeiten, muß die Empfangseinrichtung auf die Sendeeinrichtung sychronisiert werden, damit ein für beide Seiten gemeinsamer Startzeitpunkt festgelegt ist. Um eine Synchronisation der Empfangseinrichtung auf die Sendeeinrichtung vorzunehmen, kann auf der Sendeseite ein bestimmtes Bitmuster erzeugt und zur Empfangseinrichtung übertragen werden. Auf der Empfangsseite wird durch Korrelation des empfangenen Digitalsignals mit einem abgespeicherten Digitalsignal ein Kriterium zur Festlegung des Startzeitpunktes abgeleitet. Treten durch Störungen auf der Übertragungsstrecke, häufig beispielsweise bei Funkübertragung oder anderen gestörten oder störbaren Übertragungswegen, Bitfehler auf, welche zu relativ hohen Bitfehlerraten führen, so kann das übertragene Bitmuster empfangsseitig nicht immer erkannt werden, wenn ein oder mehrere Bits des Bitmusters verfälscht wurden.

Ein solches Bitmuster, welches dem eigentlichen Datenblock vorangestellt ist, ist beispielsweise eine Folge z.B. von 30 Bits, innerhalb der sich 0- und 1-Bits abwechseln. Aus dieser Bitfolge kann der Bittakt für das empfangene Digitalsignal abgeleitet werden, indem im Empfänger ein Empfangstaktgenerator vorgesehen ist, dessen Phasenlage mit der Phasenlage diese Bitmusters verglichen wird. Abhängig vom Vergleichsergebnis wird die Phasenlage des Empfangstaktgenerators so eingeregelt, daß in einem Regenerations-Flip-Flop die Abtastung der Bits des Datenblocks zum Zeitpunkt größter Augenöffnung erfolgt. Die Taktfrequenzen des Empfangstaktgenerators und des Sendetaktgenerators stimmen genügend genau überein, wobei in der digitalen Regelschleife nur eine Nachstellung der Phase vorgenommen wird.

Aus der DE-A-31 49 731 ist ein Regenerator für ein digitales Nachrichtensystem bekannt, welcher eine Regelschleife aufweist und bei dem ein Mikroprozessor die Phasenkorrektur mittels eines Phasenschiebers vornimmt. Zur Ermittlung der Phasenlage des Bittakts des empfangenen Digitalsignals wird in einem Bewertungszeitraum die Phasendifferenz zum internen Bezugstakt ermittelt und der Mittelwert berechnet. Die Phasenlage des Bittakts des empfangenen Digitalsignals zur Phase des internen Bezugstakts wird ermittelt, indem die Lage der Zeichenwechsel mit einer sägezahnförmigen Bewertungskennlinie sowie einer um Bit/2 verschobenen Sägezahnkennlinie verglichen wird. Um zu verhindern, daß durch Einwirkung von Störspannungen, Einschwingvorgänge und dergleichen der dadurch hervorgerufene Phasenjitter, d.h. die Schwankung der Kennzeitpunkte des Digitalsignals um die im Idealfall äquidistanten Zeitpunkte, sich bei der Mittelwertbildung auswirken ist für jede Bewertungskennlinie ein sogenannter Unsicherheitsbereich definiert. Zeichenwechsel, welche in den Unsicherheitsbereich fallen werden bei der weiteren Auswertung, d.h. bei der zeitlichen Mittelwertbildung der Zeichenwechsel,nicht herangezogen.

Ein solches Verfahren hat den Nachteil, daß der Aufwand zur gerätemäßigen Realisierung des Regenerators relativ hoch ist und daß bei relativ hohen Bitfehlerraten die Phasensynchronisation nur relativ ungenau oder nicht innerhalb kürzester Zeit möglich ist. Dies beruht darauf, daß bei der Bitsynchronisation Zeichenwechsel, welche in den Unsicherheitsbereich fallen, nicht berücksichtigt werden und daß infolge der zweiten Bewertungskennlinie zur Auswertung und Verarbeitung der dadurch gelieferten Ergebnisse die zugehörigen Schaltungsteile doppelt vorhanden sein müssen.

Weiterhin ist aus der DE-A-30 12 075 eine Schaltungsanordnung zur Bitsychronisation bekannt, bei der der gesamte Phasenbereich von 0 bis 360 Grad in Teilbitintervalle (sogenannte Phasenfenster) unterteilt ist und während eines Meßintervalls die Zahl des Auftretens von den Teilbitintervallen zuordenbaren Momentanphasenwerten gespeichert wird. Die Anzahl der Teilbitintervalle (Phasenfenster) wird von einer Teilerschaltung in Verbindung mit UND-Schaltungen bestimmt, wobei die vorgenannten Einrichtungen entsprechend dem Kehrwert der Anzahl von verschiedenen Phasenfenstern phasenverschobene Impulsfolgen erzeugen. Während des Meßintervalls wird mittels diesen Einrichtungen nachgeordneten Zählern die Anzahl der Flanken des empfangenen Digitalsignals, welche in das jeweilige zugehörige Teilbitintervall (Phasenfenster) gefallen sind, gezählt. Am Ende des Meßintervalls wird die Phase des Empfangsbittakts um einen Phasenschätzwert entsprechend dem Phasenwert des Teilbitintervalls mit der größten Flankenzahl korrigiert. Hierzu wird den Zählern über eine Teilerschaltung und Umschaltern ein höherer Bittakt zugeführt, wodurch das Hochzählen der Zähler beschleunigt wird. Infolge der phasenverschobenen Impulsfolgen erreicht immer nur ein Zähler zu einem bestimmten Zeitpunkt den Höchststand, wodurch mittels einer Umcodierschaltung den Zähler eine Binärzahl zugeordnet werden kann, welche in einem Speicher abgespeichert wird.Das Umschalten und Auslesen der gespeicherten Binärzahl, welche dem Teilbitintervall mit der größten Flankenzahl entspricht, wird von einer Steuerlogik gesteuert und der Empfangsbittakt wird entsprechend dem Phasenwert (Phasenschätzwert) korrigiert.

Eine solche Schaltungsanordnung weist den Nachteil auf, daß (entsprechend der Auflösung des

Phasenbereichs in Teilbitintervalle) bei einer Auflösung in beispielsweise 256 Phasenfenster jeweils 256 parallele Pfade mit Zähler, UND-Schaltung sowie Umschalter benötigt werden. Die Schaltungsanordnung erfordert somit einen hohen Schaltungsaufwand, insbesondere wenn in einem Funkübertragungssystem eine Entfernungsmessung zur Überwachung der Funkkanäle benachbarter Funkbereiche durchgeführt werden soll (DE-A-30 12 484). Bei einer Auflösung des Phasenbereichs von $360^0$ Grad in 256 Teilbitintervalle und bei einer Bitrate von z.B. 5,28 kbit/s ist eine Entfernungsmessung mit einer Genauigkeit von einigen 100 m erreichbar.

Der Erfindung liegt die Aufgabe zugrunde, ein Verfahren zur Phasen-Synchronisation eines regenerierten Empfangsbittakts auf den Bittakt eines empfangenen Digitalsignals derart anzugeben, daß eine hohe Auflösung des Phasenbereichs in Teilbitintervalle mit geringem Schaltungsaufwand erreicht werden kann und welches für unterschiedlich modulierte Digitalsignale verwendbar ist.

Die Lösung dieser Aufgabe geht aus der Fassung des Patentanspruchs 1 hervor.

Das erfindungsgemäße Verfahren weist im Vergleich zum Regenerator gemäß DE-A-31 49 731 bzw. zur Schaltungsanordnung gemäß DE-A-30 12 075 den Vorteil auf, daß es unabhängig von dem Modulationsverfahren der zu übertragenden Digitalsignale ist. Die einzige Anforderung für die Anwendbarkeit des erfindungsgemäßen Verfahrens ist, daß die Periodizität der erwarteten Flankenverteilung, d.h. der Zeichenwechsel, nicht kleiner als 360 Grad sein darf.

Im Vergleich zur Schaltungsanordnung gemäß der DE-A-30 12 075 erfordert das erfindungsgemäße Verfahren einen geringen Schaltungsaufwand. Infolge der Phasenmessung und Speicherung der Momentanphasenwerte stehen zur Bestimmung des Phasenmittelwertes mehr Informationen zur Verfügung und die Phasenkorrektur kann mit dem im Vergleich zum Phasenschätzwert viel genaueren Phasenmittelwert erfolgen.

In den nachfolgenden Unteransprüchen sind bevorzugte Ausführungsformen der Erfindung angegeben.

Die Schaltungsanordnung gemäß Patentanspruch 5, weist einen geringen Schaltungsaufwand auf.

Die in Anspruch 5 enthaltenen Bauteile, nämlich Phasenverarbeitungseinrichtung, Einrichtung zur Berechnung des Phasenmittelwertes und die Phasenkorrektureinrichtung können durch einen Mikroprozessor realisiert werden.

Die Erfindung wird im folgenden anhand einer in der Zeichnung dargestellten Ausführungsform näher beschrieben und erläutert. Es zeigt:

- Fig. 1 verschiedene Formen von Digitalsignalen,
- Fig. 2 ein Blockschaltbild der beim erfindungsgemäßen Verfahren verwendeten Schaltungsteile eines Regenerators und
- Fig. 3 die bei Anwendung des erfindungsgemäßen Verfahrens im Regenerator auftretenden Signale bei unterschiedlichen Phasenjitter.

Fig. 1 zeigt verschieden codierte Datensignale, für die, unter Anwendung des erfindungsgemäßen Verfahrens, die Nachführung der Phase des regenerierten Empfangsbittakts auf den Bittakt das empfangenen Digitalsignals auf einfache Art und Weise möglich ist. Das empfangene Digitalsignal (Datensignal) ist ein amplitudendiskretes (binäres) zeitkontinuierliches Signal. Die Rückgewinnung der Daten erfolgt mit Hilfe des regenerierten Empfangsbittakts, wobei die Qualität der Datenregeneration, d.h. die Bitfehlerrate, vom Jitter, d.h. von einer zufälligen zeitlichen Verschiebung der Polaritätswechsel des empfangenen Digitalsignals, abhängig ist.

In Fig. 1 ist das Digitalsignal D in der ersten Zeile in NRZ-Form, in der zweiten Zeile in der Manchester-Form, in der dritten und vierten Zeile in der amplituden begrenzten FFSK-Form dargestellt. Die Kennzustände des Binärsignals, d.h. log 0 bzw. log 1 sind als Spaltenüberschriften angegeben. Die log 0 bzw. log 1 Kennzustände des Binärsignals gemäß der dritten und vierten Zeile werden beim Senden phasensprungfrei aneinander gefügt (continuous-phase-FFSK). Durch Phasenjitter kann nun eine Schwankung der Kennzeitpunkte um die im Idealfall zu erwartenden Zeitpunkte beim Übergang von log 0 nach log 1 bzw. umgekehrt (Zeichenwechsel) auftreten.

Fig. 2 zeigt das Blockschaltbild der beim erfindungsgemäßen Verfahren verwendeten Schaltungsteile des Regenerators. Zur Synchronisation der Phase eines regenerierten Empfangsbittakt RET auf den Bittakt eines empfangenen Digitalsignals RDS, wird in einer digitalen Regelschleife die Phasenlage des Bittakts zur Phase des regenerierten Empfangsbittakt RET ermittelt und in Abhängigkeit davon wird bei Phasenabweichung mittels eines Korrekturphasenwerts KPW die Phase des regenerierten Empfangsbittakt RET korrigiert.

Der regenerierte Empfangsbittakt RET wird in einem Empfangstaktgenerator ETG erzeugt, wobei die Frequenz des regenerierten Empfangsbittakts RET mit der Frequenz des empfangenen Digitalsignals annähernd übereinstimmt. Außerdem liefert der Empfangstaktgenerator ETG den Empfangszeitbezug EZB der mit der Phasenlage des regenerierten Empfangsbittakt RET starr gekoppelt ist. Der Empfangszeitbezug

EZB gibt beispielsweise in binär codierter Form an, wie lange der Beginn der momentanen Periode des regenerierten Empfangsbittakt RET zurückliegt.

Zur Ermittlung der Phasenlage des Bittakts des empfangenen Digitalsignals RDS zur Phase des regenerierten Empfangsbittakts RET werden das Digitalsignal RDS und der Empfangszeitbezug EZB in einer Phasenmeßeinrichtung PM miteinander verknüpft. Die Phasenmeßeinrichtung PM vergleicht die zeitliche Lage der Polaritätswechsel des empfangenen Digitalsignals RDS mit dem Empfangszeitbezug EZB und ermittelt für jeden Polaritätswechsel einen Momentanphasenwert MPW. Der Momentanphasenwert MPW gibt die zeitliche Verzögerung des Polaritätswechsels des empfangenen Digitalsignals RDS gegenüber dem Beginn der Periode des regenerierten Empfangsbittakts RET an und wird einer Phasenverarbeitungseinrichtung PVE zugeführt.

Akkumulierte Phasenwerte APW am Ausgang der Phasenverarbeitungseinrichtung PVE werden einer Einrichtung PME zugeführt, welche einen Phasenwert PMW ermittelt. Enthält die Phasenverarbeitungseinrichtung PVE einen Phasenakkumulator PA, so entspricht der Phasenwert APW den akkumulierten, d.h. aufsummierten Momentanphasenwerten MPW. In der Einrichtung PME kann nun aus den akkumulierten Phasenwerten APW der Phasenmittelwert PMW berechnet werden.

Eine Phasenkorrektureinrichtung PK leitet aus dem Phasenmittelwert PMW den Korrekturphasenwert KPW für den Empfangstaktgenerator ETG ab, wobei an dessen Ausgängen der regenerierte Empfangsbittakt RET und der Empfangszeitbezug EZB abgegriffen werden können.

In einer bevorzugten Ausführungsform (für genaue Entfernungsmessung) wird der gesamte Phasenbereich in 256 Grundtaktperioden unterteilt. Eine Grundtaktperiode entspricht $360^o/256 = 1{,}4^o$. Jeweils 32 solcher Grundtaktperioden bilden ein Teilbitintervall. Hierbei umfaßt Teilbitintervall 0 die Grundtaktperioden 0....31, Teilbitintervall 1 die Grundtaktperioden 32....63, usw. Im Phasenakkumulator PA sind diesen Teilbitintervallen zugehörige Speicherbereiche vorgesehen. Jeder Momentanphasenwert MPW wird im zugehörigen Speicherbereich erfaßt.

Die Phasenmeßeinrichtung PM ermittelt bitweise die zeitliche Lage der Polaritätswechsel des empfangenen Digitalsignals RDS relativ zur zeitlichen Lage des Beginns der Phase des regenerierten Empfangsbittakts RET. Dazu wird in der Phasenmeßeinrichtung PM zum Zeitpunkt des Polaritätswechsels des empfangenen Digitalsignals RDS der momentane Wert des Empfangszeitbezugs EZB abgetastet und dieser als Momentanphasenwert MPW dem Phasenakkumulator PA zugeführt. Gleichzeitig wird im zugehörigen Speicherbereich die Zahl der diesem Speicherbereich zuordenbaren Momentanphasenwerte erfasst.

Die binär codierten Phasenwerte APW bestehen pro Teilbitintervall aus zwei Werten, nämlich einem akkumulierten Phasenwert PA (i) entsprechend der Summe der in diesem Teilbitintervall erfaßten Momentanphasenwerte und einem Flankenzählerstand FZ(i) entsprechend der Zahl von in diesem Teilspeicherbereich erfaßten Momentanphasenwerte. Die Ermittlung der Phasenwerte APW kann anhand von absoluten oder relativen Phasenwerten erfolgen. Beim absoluten Phasenwert wird die Phasendifferenz jedes Momentanphasenwerts MPW auf den Beginn des Meßintervalls, d.h. auf 0 Grad bezogen, während beim relativen Phasenwert die Phasendifferenz zwischen Momentanphasenwert MPW und Phasenbeginn des Teilbitintervalls bestimmt wird.

Alle relativen Phasenabweichungen können auch in einem einzigen Phasenakkumulator PA gespeichert werden. Im Speicherbereich wird nur die Zahl der den verschiedenen Speicherbereichen zuordenbaren Momentanphasenwerte MPW gespeichert. Der Speicherbereich, in dem die Zahl der den verschiedenen Teilbitintervallen zuordenbaren Momentanphasenwerte MPW gespeichert werden, ist in Fig. 2 als Flankenzähler FI bezeichnet.

Der Inhalt der Flankenzähler FI ist ein Abbild der Dichteverteilung von verschiedenen Momentanphasenwerte MPW, wobei dieses Abbild relativ grob ist. Für jede der in Fig. 1 dargestellten Signalformen existiert eine erwartete Dichteverteilung, gekennzeichnet durch eine sogenannte Musterfunktion MF(j). Fig. 3 zeigt als Beispiel die Musterfunktion für ein Signal nach Fig. 1, Zeile 3 und 4. Diese Dichteverteilung zeigt, daß die Flanken des empfangenen Digitalsignals RDS, nur in eines oder einige wenige Teilbitintervalle zeigen. Die Ermittlung des Phasenmittelwertes PMW erfolgt in zwei Schritten und wird im folgenden anhand Fig. 3 beschrieben und erläutert.

Der erste Schritt betrifft die Berechnung des Teilbitintervalls. Dazu wird die Musterfunktion MF(j) (erwartete Flankenverteilung) mit der Probefunktion FZ(i) (gemessene Flankenverteilung) korreliert. Aus der Lage des Maximums der Korrelationsfunktion folgt das Teilbitintervall, in dem der Phosenschätzwert PSW mit größter Wahrscheinlichkeit liegt.

Im zweiten Schritt wird nun die relative Lage der Momentanphasenwerte MPW in diesem Teilbitintervall bestimmt. Dazu werden die akkumulierten Relativphasen aller Momentanphasenwerte MPW dieses Teilbitintervalls summiert und durch den Flankenzählerstand dividiert.

Infolge der zweistufigen Berechnung des Phasenmittelwertes PMW kann auch bei hoher Zeitauflösung

die Zahl der Phasenakkumulatoren PA klein gehalten werden. Anhand der in Fig. 3 dargestellten Probefunktion FZ(i) und Musterfunktion MF(i) wird die Berechnung des Phasenmittelwerts PMW näher beschrieben und erläutert.

1. Bestimmung des Phasenschätzwerts PSW

Um die bei bestimmten Phasenverschiebungen auftretenden Probleme der Mehrdeutigkeit der Momentanphasenwerte MPW aufzulösen, wird die Musterfunktion MF(j) außerhalb des Phasenbereichs von 0...360$^0$ periodisch fortgesetzt, was einer "probeweisen" Korrektur der Phasenwerte um +/- 360° entspricht.

Um aus einer gemessenen Probefunktion FZ(i) auf die zugrundeliegende Phasenverschiebung schließen zu können, wird die Probefunktion FZ(i) mit der Musterfunktion MF(j) gemäß folgender Gleichung verknüpft:

$$(1) \quad K(n) = \sum_{i=0}^{N-1} FZ(i) * MF(i-n)$$

Das Korrelationsprodukt K(n) wird für alle n = 0,..., N-1 berechnet. Der Wert von n, welcher zum größten Korrelationsprodukt K(n) führt, wird mit der Breite des Teilbitintervalls (entsprechend 360$^0$/N) multipliziert, wodurch sich der Phasenschätzwert PSW ergibt.

Wie in Fig. 3 dargestellt, wird die erwartete Flankenverteilung mit einer sehr einfachen Musterfunktion MF(j) angenährt, welche nur die Werte "0" oder "1" annimmt, wodurch sich die Berechnung des Korrelationsprodukts K(n) auf eine Addition bestimmter Flankenzählerstände reduziert. Anhand eines Zahlenbeispiels soll die Berechung des Phasenschätzwertes PSW verdeutlicht werden.

| i,j,n | MF(j) | FZ(i) | PA(i) | K(n) | |
|---|---|---|---|---|---|
| 0 | 0 | 1 | 5 | 0 + 0 + 0 + 0 + 0 + 0 = 0 | |
| 1 | 0 | 9 | 114 | 0 + 0 + 0 +15 + 0 +13 = 28 | |
| 2 | 0 | 16 | 78 | 0 + 0 +15 +17 +13 + 5 = 50 | |
| 3 | 1 | 0 | 0 | 0 + 0 +17 + 0 + 5 + 0 = 22 | |
| 4 | 1 | 0 | 0 | 0 + 0 + 0 + 0 + 0 + 1 = 1 | |
| 5 | 0 | 0 | 0 | 0 +15 + 0 +13 + 1 + 9 = 38 | |
| 6 | 0 | 0 | 0 | 15 +17 +13 + 5 + 9 +16 = 75 | « |
| 7 | 1 | 0 | 0 | 17 + 0 + 5 + 0 +16 + 0 = 38 | |
| 8 | 1 | 0 | 0 | 0 + 0 + 0 + 1 + 0 + 0 = 1 | |
| 9 | 0 | 15 | 207 | 0 +13 + 1 + 9 + 0 + 0 = 23 | |
| 10 | 0 | 17 | 82 | 13 + 5 + 9 +16 + 0 + 0 = 43 | |
| 11 | 1 | 0 | 0 | 5 + 0 +16 + 0 + 0 + 0 = 21 | |
| 12 | 1 | 0 | 0 | 0 + 1 + 0 + 0 + 0 + 0 = 1 | |
| 13 | 0 | 13 | 172 | 1 + 9 + 0 + 0 + 0 +15 = 25 | |
| 14 | 0 | 5 | 22 | 9 +16 + 0 + 0 +15 +17 = 57 | |
| 15 | 0 | 0 | 0 | 16 + 0 + 0 + 0 +17 + 0 = 33 | |

Tabelle 1

Wie aus der Tabelle 1 hervorgeht, liegt für den Wert n = 6 das größte Korrelationsprodukt K(n) vor. Der Phasenschätzwert PSW ergibt sich bei einer Unterteilung des gesamten Phasenbereichs in 16 Teilbitintervalle zu 6 x 16 = 96.

Bei der Berechnung des Phasenschätzwerts PSW wird der gesamte Phasenbereich entsprechend der Zahl von Flankenzählern (vgl. DE-A-30 12 075) in Teilbitintervalle (Phasenfenster) unterteilt. Die einzige Voraussetzung für die Berechnung des Phasenschätzwerts PSW ist, daß die Musterfunktion MF(j) eine Periodizität von mindestens einem Bit (entsprechend $360^0$) haben muß. Dadurch kann das erfindungsgemäße Verfahren bei verschieden codierten Digitalsignalen verwendet werden und ist nicht auf NRZ-Signale (vgl. DE-A-31 49 731) beschränkt.

Der aufgrund der Flankenzählerstände FZ(i) ermittelte Phasenschätzwert PSW nähert den tatsächlichen Phasenmittelwert PMW nur durch ein ganzzahliges Vielfaches der Breite eines Teilbitintervalls an. Die genaue Lage der Datenflanken innerhalb des jeweiligen Teilbitintervalls ist dabei zunächst vernachlässigt.

Eine genauere Bestimmung des Phasenmittelwertes PMW erfolgt dadurch, indem bei der Auswertung zusätzlich die relative Lage der Datenflanken innerhalb ihres jeweiligen Teilbitintervalls (gegeben durch die Inhalte PA(i) der Phasenakkumulatoren PA) mit herangezogen werden. Da die Inhalte PA(i), d.h. die Phasenwerte APW, nur die Lage der Datenflanken innerhalb eines Teilbitintervalls berücksichtigen, wird für jedes Teilbitintervall entschieden, aus welcher Sollage (vgl. Musterfunktion MF(i)) die dort angefallenen Datenflanken wahrscheinlich entstanden sind (beim in Fig. 3 dargestellten Beispiel bei 90°, 180° oder 270°) und die Differenz ausgeglichen. Dieser Korrekturschritt läßt sich mit Hilfe einer "Korrekturfunktion KF(i-n)" vornehmen, welche für jedes Teilbitintervall (i-n) angibt, um welchen Wert jede dort angefallene Datenflanke zu korregieren ist.

Falls bei der Korrektur solche Teilbitintervalle nicht berücksichtigt werden sollen, bei denen beispielsweise eine Zuordnung zu einer Sollage schwierig ist, so kann dies mittels einer "Auswahlfunktion" AF(i-n) erfolgen. Diese Auswahlfunktion AF gibt für ein bestimmtes Teilbitintervall (i-n) an, ob dieses Teilbitintervall berücksichtigt (AF = 1) oder nicht berücksichtigt (AF = 0) werden soll. Der Phasenmittelwert PMW wird gemäß der folgenden Gleichung berechnet:

$$(2)\quad PMW = PSW + \frac{\sum_{i=0}^{N-1} AF(i-n) * \left[PA(i) + KF(i-n) * FZ(i)\right]}{\sum_{i=0}^{N-1} AF(i-n) * FZ(i)}$$

Wie bereits ausgeführt, erfolgt die Berechnung des Phasenmittelwerts PMW nur für das Teilbitintervall mit dem größten Korrelationsprodukt K(n). Werden Auswahlfunktion AF und Musterfunktion MF gleich gewählt, So ergeben sich die in Tabelle 2 enthaltenen Werte.

| i-n | AF (i-n) | KF (i-n) |
|---|---|---|
| 0 | 0 | - 64 |
| 1 | 0 | - 48 |
| 2 | 0 | - 32 |
| 3 | 1 | - 16 |
| 4 | 1 | 0 |
| 5 | 0 | + 16 |
| 6 | 0 | - 32 |
| 7 | 1 | - 16 |
| 8 | 1 | 0 |
| 9 | 0 | + 16 |
| 10 | 0 | - 32 |
| 11 | 1 | - 16 |
| 12 | 1 | 0 |
| 13 | 0 | + 16 |
| 14 | 0 | + 32 |
| 15 | 0 | + 48 |

Tabelle 2

In der nachfolgenden Tabelle 3 sind für das Zahlenbeispiel gemäß Tabelle 1 die bei der Berechnung des Phasenmittelwerts PMW anfallenden Werte angegeben. Die Werte von FZ(i) sind in Fig. 3 eingetragen.

| i | i-n | AF(i-n) | KF(i-n) | FZ(i) | PA(i) | Z(i) | N(i) |
|---|---|---|---|---|---|---|---|
| 0 | - 6 | 0 | - 32 | 1 | 5 | 0 | 0 |
| 1 | - 5 | 1 | - 16 | 9 | 114 | - 30 | 9 |
| 2 | - 4 | 1 | 0 | 16 | 78 | + 78 | 16 |
| 3 | - 3 | 0 | + 16 | 0 | 0 | 0 | 0 |
| 4 | - 2 | 0 | + 32 | 0 | 0 | 0 | 0 |
| 5 | - 1 | 0 | + 48 | 0 | 0 | 0 | 0 |
| 6 | 0 | 0 | - 64 | 0 | 0 | 0 | 0 |
| 7 | 1 | 0 | - 48 | 0 | 0 | 0 | 0 |
| 8 | 2 | 0 | - 32 | 0 | 0 | 0 | 0 |
| 9 | 3 | 1 | - 16 | 15 | 207 | - 33 | 15 |
| 10 | 4 | 1 | 0 | 17 | 82 | + 82 | 17 |
| 11 | 5 | 0 | + 16 | 0 | 0 | 0 | 0 |
| 12 | 6 | 0 | - 32 | 0 | 0 | 0 | 0 |
| 13 | 7 | 1 | - 16 | 13 | 172 | - 36 | 13 |
| 14 | 8 | 1 | 0 | 5 | 22 | + 22 | 5 |
| 15 | 9 | 0 | + 16 | 0 | 0 | 0 | 0 |
| | | | | | | + 83 | 75 |

Tabelle 3

Mit Z(i) und N(I) sind in Tabelle 3 Zähler- und Nennerausdruck von Gleichung (2) bezeichnet. Der

Phasenmittelwert PMW ergibt sich somit zu

$$PMW = 6 * 16 + 83/75 = 97 \text{ Grundtaktperioden} = $$
$$= 97 * 360^{o}/256 = 136,4^{o}.$$

Durch das erfindungsgemäße Verfahren kann eine zufällige zeitliche Verschiebung der Politaritätswechsel im codierten Binärsignal fast ausgeglichen werden, so daß die Qualität der Datenregeneration (Bitfehlerrate) erhöht werden kann. Die Kurzzeitstatistik der Momentanphasenwerte MPW kann innerhalb kurzer Meßintervalle gewonnen wergen, so daß eine schnelle und genaue Phasensynchronisation erfolgen kann.

**Patentansprüche**

1. Verfahren zur Phasensynchronisation eines regenerierten Empfangsbittakts (RET) auf den Bittakt eines empfangenen Digitalsignals (RDS), bei dem der gesamte Phasenbereich in N Teilbitintervalle unterteilt ist und während eines Meßintervalls die in den N Teilbitintervallen auftretenden Flanken der Momentanphasenwerte (MPW) gezählt werden und bei dem am Ende des Meßintervalls die Phase des Empfangsbittakts (RET) um einen Phasenschätzwert (PSW) korrigiert wird, dadurch gekennzeichnet, daß während des Meßintervalls die zeitliche Lage der Polaritätswechsel des empfangenen Digitalsignals (RDS) relativ zum Empfangsbittakt (RET) gemessen und diese Momentphasenwerte (MPW) den N Teilbitintervallen zugeordnet und akkumuliert werden und daß am Ende des Meßintervalls mit Hilfe des Phasenschätzwerts (PSW) und den akkumulierten Phasenwerten (APW) ein Phasenmittelwert (PMW) bestimmt und die Phase des Empfangsbittakts (RET) um den Phasenmittelwert korrigiert wird.

2. Verfahren nach Anspruch 1, dadurch gekennzeichnet, daß die Phasendifferenz zwischen Momentanphasenwert (MPW) und Phase des Teilbitintervallanfangs bestimmt und diese relative Phasendifferenz akkumuliert wird.

3. Verfahren nach Anspruch 1 und 2, dadurch gekennzeichnet, daß die gemessenen Momentanphasenwerte (MPW) pro Teilbitintervall akkumuliert und der akkumulierte Phasenwert (PA(i)) gespeichert wird.

4. Verfahren nach den Ansprüchen 1 bis 3, dadurch gekennzeichnet, daß der Phasenmittelwert (PMW) gemäß der Gleichung:

$$PMW = PSW + \frac{\sum_{i=0}^{N-1} AF(i-n) * \left[PA(i) + KF(i-n) * FZ(i)\right]}{\sum_{i=0}^{N-1} AF(i-n) * FZ(i)}$$

berechnet wird, wobei der Phasenschätzwert (PSW) gemäß der Gleichung

$$PSW = n_{max} * \frac{360^{0}}{N}$$

berechnet wird, wobei $n_{max}$ das Teilbitintervall mit dem maximalen Korrelationsprodukt $K(n)_{max}$ von einer Probefunktion FZ(i) mit einer Musterfunktion MF(i-n) ist, wobei PA(i) der akkumulierte Phasenwert ist, wobei AF(i-n) eine Auswahlfunktion ist und wobei KF(i-n) eine Korrekturfunktion ist.

5. Schaltungsanordnung zur Durchführung des Verfahrens nach Anspruch 1 unter Anwendung des Prinzips einer digitalen Phasenregelschleife, dadurch gekennzeichnet,
daß eine Phasenmeßeinrichtung (PM) vorgesehen ist, der eine Phasenverarbeitungseinrichtung (PVE), bestehend aus mindestens einem Phasenakkumulator (PA) und Flankenzählern (FI), nachgeschaltet ist,
daß der Ausgang der Phasenverarbeitungseinrichtung (PVE) mit dem Eingang einer Einrichtung (PME) zur Berechnung des Phasenmittelwertes (PMW) verbunden ist und
daß der Ausgang dieser Einrichtung (PME) an den Eingang einer Phasenkorrektureinrichtung (PK) geführt ist.

6. Schaltungsanordnung nach Anspruch 5, dadurch gekennzeichnet, daß Phasenverarbeitungseinrichtung (PVE), Einrichtung (PME) und Phasenkorrektureinrichtung durch einen Mikroprozessor realisiert werden.

**Claims**

1. Method of synchronising the phase of a regenerated receive bit clock (RET) with the bit clock of a received digital signal (RDS), according to which the overall phase range is subdivided into N partial bit intervals and the edges of the instantaneous phase values (MPW) occurring in the N partial bit intervals are counted during a measuring interval and according to which at the end of the measuring interval the phase of the receive bit clock (RET) is corrected by an estimated phase value (PSW), characterized in that during the measuring interval the position in time of the polarity change of the received digital signal (RDS) relative to the receive bit clock (RET) is measured and these instantaneous phase values (MPW) are assigned to the N partial bit intervals and accumulated and in that at the end of the measuring interval a mean phase value (PMW) is determined with the aid of the estimated phase value (PSW) and the accumulated phase values (APW), and the phase of the receive bit clock (RET) is corrected by the mean phase value.

2. Method as claimed in Claim 1, characterized in that the phase difference between the instantaneous phase value (MPW) and the phase of the start of the partial bit interval is determined and this relative phase difference is accumulated.

3. Method as claimed in Claims 1 and 2, characterized in that the measured instantaneous phase values (MPW) are accumulated in each partial bit interval and in that the accumulated phase value (PA(i)) is stored.

4. Method as claimed in Claims 1 to 3, characterized in that the mean phase value (PMW) is calculated in accordance with the equation:

$$PMW = PSW + \frac{\sum_{i=0}^{N-1} AF(i-n) * [PA(i) + KF(i-n) * FZ(i)]}{\sum_{i=0}^{N-1} AF(i-n) * FZ(i)}$$

wherein the estimated phase value (PSW) is calculated in accordance with the equation where $n_{max}$ is the partial bit interval with the maximum correlation product $K(n)_{max}$ of a

$$PSW = n_{max} * \frac{360°}{N}$$

trial function FZ(i) with a sample function MF(i-n), where PA(i) is the accumulated phase value, where AF(i-n) is a selection function and where KF(i-n) is a correction function.

5. Circuit arrangement for implementing the method as claimed in Claim 1, using the principle of a digital phase control loop, characterized in that a phase measuring arrangement (PM) is provided followed in

the circuit by a phase processing arrangement (PVE) formed by at least one phase accumulator (PA) and edge counters (FI), in that the output of the phase processing arrangement (PVE) is connected to the input of an arrangement (PME) for calculating the mean phase value (PMW) and in that the output of this arrangement (PME) is connected to the input of a phase correction arrangement (PK).

6. Circuit arrangement as claimed in Claim 5, characterized in that phase processing arrangement (PVE), the arrangement (PME) and the phase correction arrangement are realised by a microprocessor.

**Revendications**

1. Procédé pour la synchronisation en phase d'une horloge binaire de réception régénérée (RET) sur l'horloge binaire d'un signal numérique reçu (RDS), dans lequel l'ensemble du domaine de phases est subdivisé en N intervalles binaires partiels et, pendant un intervalle de mesure, les flancs des valeurs de phases instantanées (MPW) apparaissant dans les N intervalles binaires partiels sont comptés et dans lequel, à la fin de l'intervalle de mesure, la phase de l'horloge binaire de réception (RET) est corrigée d'une valeur d'estimation de phase (PSW), caractérisé en ce que, pendant l'intervalle de mesure, la position temporelle du changement de polarité du signal numérique reçu (RDS) est mesurée par rapport à l'horloge binaire de réception (RET) et ces valeurs de phases instantanées (MPW) sont associées aux N intervalles binaires partiels et sont accumulées et qu'à la fin de l'intervalle de mesure, une valeur moyenne de phase (PMW) est déterminée au moyen de la valeur d'estimation de phase (PSW) et des valeurs de phases accumulées (APW) et la phase de l'horloge binaire de réception (RET) est corrigée de la valeur moyenne de phase.

2. Procédé suivant la revendication 1, caractérisé en ce que la différence de phases entre la valeur de phase instantanée (MPW) et la phase de l'intervalle binaire partiel est déterminée et cette différence de phases relative est accumulée.

3. Procédé suivant les revendications 1 et 2, caractérisé en ce que les valeurs de phases instantanées (MPW) mesurées par intervalle binaire partiel sont accumulées et la valeur de phases accumulées [PA-(i)] est stockée.

4. Procédé suivant les revendications 1 à 3, caractérisé en ce que la valeur moyenne de phase (PMW) est calculée selon l'équation :

$$PMW = PSW + \frac{\sum_{i=0}^{N-1} AF(i-n) * [PA(i) + KF(i-n) * FZ(i)]}{\sum_{i=0}^{N-1} AF(i-n) * FZ(i)}$$

la valeur d'estimation de phase (PSW) étant calculée selon l'équation :

$$PSW = n_{max} * \frac{360°}{N}$$

où $n_{max}$ est l'intervalle binaire partiel présentant le produit de corrélation maximum $K(n)_{max}$ d'une fonction d'épreuve FZ(i) avec une fonction de configuration MF(i-n), PA(i) est la valeur de phases accumulées, AF(i-n) est une fonction de sélection et KF(i-n) est une fonction de correction.

5. Montage de circuit pour exécuter le procédé suivant la revendication 1 en appliquant le principe d'une boucle de régulation de phase numérique, caractérisé en ce qu'un dispositif de mesure de phase (PM) est prévu en aval d'un dispositif de traitement de phase (PVE) constitué d'au moins un accumulateur de phase (PA) et de compteurs de flancs (FI), que la sortie du dispositif de traitement de phase (PVE)

est connectée à l'entrée d'un dispositif (PME) pour le calcul de la valeur moyenne de phase (PMW) et que la sortie de ce dispositif (PME) est appliquée à l'entrée d'un dispositif de correction de phase (PK).

**6.** Montage de circuit suivant la revendication 5, caractérisé en ce que le dispositif de traitement de phase (PVE), le dispositif (PME) et le dispositif de correction de phase sont réalisés par un microprocesseur.

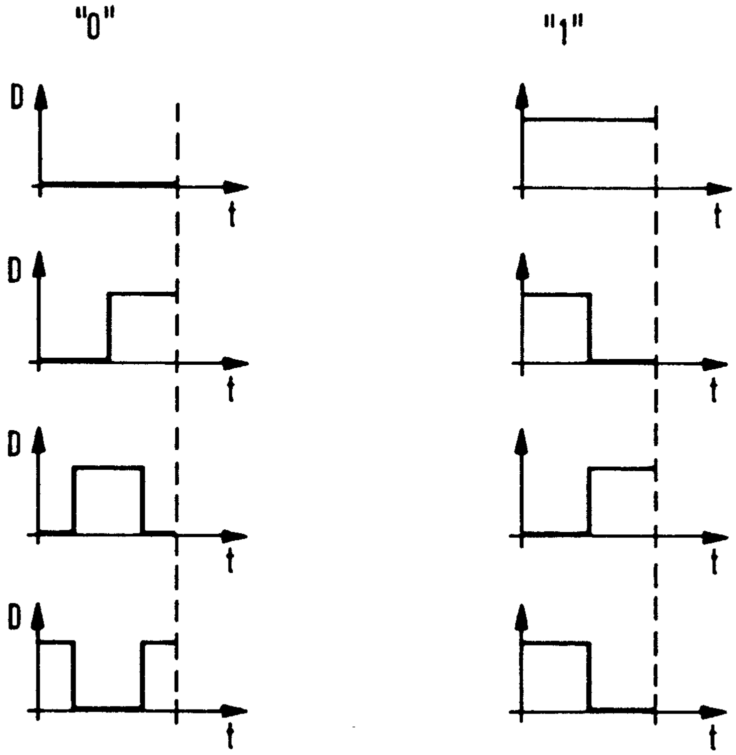


FIG.1

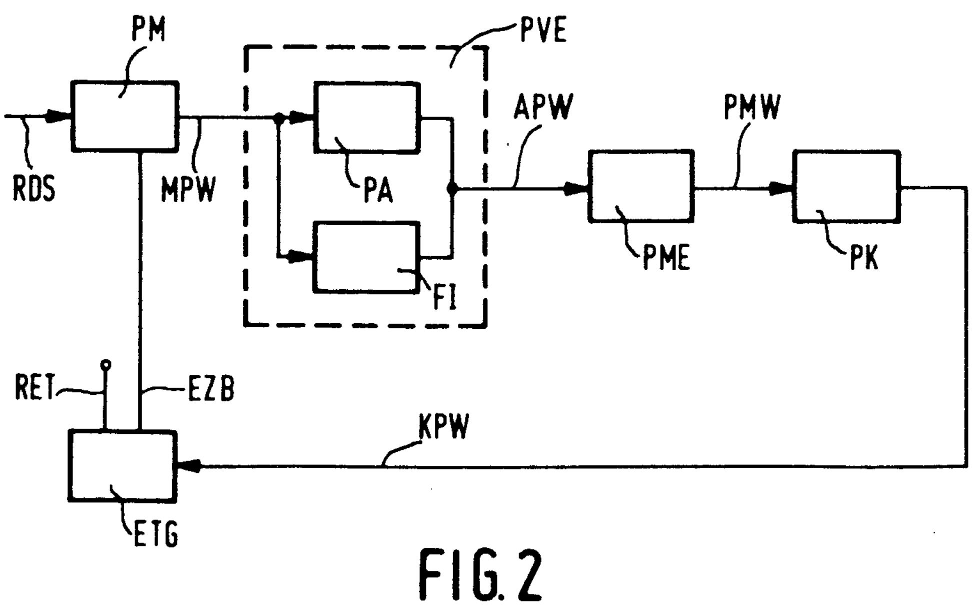


FIG.2